# DEMANDE DE BREVET EUROPEEN

(11) **EP 3 839 649 A1**
(43) Date de publication de la demande: **23.06.2021**
(21) Numéro de dépôt: 19218831.6
(22) Date de dépôt: 20.12.2019
(51) Int. Cl.: G04B 13/02, G04B 15/14, G04B 17/06

(54) **COMPOSANT HORLOGER RIGIDE POUR MECANISME OSCILLATEUR OU POUR MECANISME D'ECHAPPEMENT ET MOUVEMENT D'HORLOGERIE COMPORTANT UN TEL COMPOSANT**

(71) Demandeur: Nivarox-FAR S.A., 2400 Le Locle (CH)
(72) Inventeur: CUSIN, M. Pierre, 1423 Villars-Burquin (CH); CHARBON, M. Christian, 2054 Chézard-St-Martin (CH)
(74) Mandataire: ICB SA

(57) **Abrégé**

L'invention concerne un composant horloger rigide pour mécanisme oscillateur ou pour mécanisme d'échappement d'un mouvement horloger, le composant comportant au moins une partie réalisée en un matière composite (1), la matière composite (1) comprenant une matrice (2) et une multitude de nanotubes ou de nano-fils (3) répartis dans la matrice (2), les nanotubes ou nano-fils (3) étant juxtaposés et disposés de manière sensiblement parallèles à un axe (A) sensiblement perpendiculaire au plan (P) du composant, la matrice (2) comporte un matériau rigide (4) pour remplir les interstices et joindre les nanotubes ou nano-fils (3) les uns aux autres, le matériau (4) ayant des propriétés mécaniques rigides pour s'opposer à la déformation élastique du composant.

## Description

### Domaine de l'invention

La présente invention est relative aux composants horlogers rigides pour mécanisme oscillateur ou pour mécanisme d'échappement d'un mouvement d'horlogerie.

L'invention se rapporte également à un mouvement d'horlogerie comportant un tel composant.

### Arrière-plan de l'invention

Les mouvements horlogers comprennent généralement un mécanisme d'échappement et un mécanisme oscillateur mécanique. Le mécanisme d'échappement comporte notamment une ancre et une roue d'échappement, tandis que le mécanisme oscillateur comprend par exemple un ressort spiral associé à une masselotte oscillante appelée balancier.

Les progrès techniques dans les matériaux composites permettent aujourd'hui de fabriquer certains composants dans des matériaux innovants et performants, qui permettent de se passer, au moins en partie, des matériaux métalliques. Aujourd'hui, on essaye d'utiliser, par exemple, des nanotubes ou nano-fils pour fabriquer des composants. De tels matériaux avec des nanotubes ou nano-fils apportent des avantages en terme de légèreté et de solidité. Ainsi, le document JP2008116205A décrit un ressort spiral comprenant une matrice de graphite et de carbone amorphe, renforcée par des nanotubes de carbone qui sont dispersés dans la matrice et alignés dans la direction longitudinale du spiral.

Cependant, certains composants, tels qu'une roue ou une ancre d'échappement, demandent une grande rigidité, en particulier pour que le mouvement horloger soit précis. Or, les composants décrits dans ce document ne permettent pas de réaliser des éléments rigides, mais uniquement des composants flexibles pour faire des ressorts.

### Résumé de l'invention

Un but de l'invention est, par conséquent, de proposer un composant horloger rigide, qui évite les problèmes précités.

A cet effet, l'invention concerne un composant horloger rigide pour mécanisme oscillateur ou pour mécanisme d'échappement d'un mouvement horloger, le composant comportant au moins une partie réalisée en une matière composite.

Le composant est remarquable en ce que la matière composite comprend une matrice et une multitude de nanotubes ou de nano-fils répartis dans la matrice, les nanotubes ou nano-fils étant juxtaposés et disposés de manière sensiblement parallèles à un axe sensiblement perpendiculaire au plan du composant, la matrice comportant un matériau rigide pour remplir les interstices et joindre les nanotubes ou nano-fils les uns aux autres, le matériau ayant des propriétés mécaniques rigides permettant de s'opposer à une déformation élastique du composant.

Ainsi, grâce à un tel composant rigide, on peut réaliser certains éléments d'un mouvement horloger, qui doivent éviter toute flexion, telles une roue ou une ancre d'échappement, tout en ayant les avantages des matières composites à base de nanotubes ou des nano-fils. Les avantages apportés par ces matériaux composites sont, outre la légèreté, la possibilité d'utiliser des matériaux résistant à l'oxydation et qui peuvent être autolubrifiants. Il est possible également de faire varier le taux d'infiltration du matériau rigide pour alléger davantage le composant ou de le rendre poreux, notamment pour l'autolubrification.

Selon une forme de réalisation avantageuse, le matériau rigide a un module d'Young supérieur à 2GPa.

Selon une forme de réalisation avantageuse, les nanotubes sont en carbone.

Selon une forme de réalisation avantageuse, les nanotubes sont multi-feuillets.

Selon une forme de réalisation avantageuse, les nano-fils sont réalisés à partir d'un élément à choisir notamment dans la liste suivante : de l'or, du silicium, de l'oxyde de silicium, du nitrure de bore, du nitrure de gallium, du nitrure de silicium, de l'oxyde de zinc, de l'arséniure de gallium, du sulfure de tungstène, de l'argent, du cuivre, de l'arséniure de manganèse, de l'arséniure d'indium, du carbone, du diamant.

Selon une forme de réalisation avantageuse, les nanotubes ou nano-fils ont un diamètre compris dans un intervalle allant de 2 à 50 nm, de préférence dans un intervalle allant de 3 à 15 nm, voire de 5 à 10 nm.

Selon une forme de réalisation avantageuse, les nanotubes ou nano-fils ont une longueur comprise dans un intervalle allant de 100 à 500 microns, de préférence dans un intervalle allant de 100 à 300 microns, voire de 150 à 200 microns.

Selon une forme de réalisation avantageuse, le matériau rigide est réalisé à partir d'un élément à choisir dans la liste suivante : du tungstène, des matériaux organiques comme le parylène, du nitrure de bore hexagonal, du rubis monocristallin de type Al2O3, du diamant, des bisulfures de tungstène ou de molybdène, du graphite, du plomb, du carbure de silicium, du nickel, du phosphure d'indium, de l'oxyde de titane, du silicium, de l'oxyde de silicium, du carbone.

Selon une forme de réalisation avantageuse, le composant est une ancre de mécanisme d'échappement.

Selon une forme de réalisation avantageuse, le composant est une roue de mécanisme d'échappement.

Selon une forme de réalisation avantageuse, le composant est un rouage de mouvement horloger.

Selon une forme de réalisation avantageuse, le composant est un balancier de mécanisme oscillateur

L'invention se rapporte également à un mouvement horloger comprenant un composant horloger rigide selon l'invention.

### Description sommaire des dessins

D'autres caractéristiques et avantages de la présente invention apparaîtront à la lecture de plusieurs formes de réalisation données uniquement à titre d'exemples non limitatifs, en référence aux dessins annexés dans lesquels :
- la figure 1 représente schématiquement une vue en perspective traversante d'une matière composite selon l'invention,
- la figure 2 représente schématiquement une vue en coupe de la matière composite au cours du procédé de fabrication du premier mode de réalisation selon l'invention,
- la figure 3 représente schématiquement une vue de dessus d'une ancre de mécanisme d'échappement,
- la figure 4 représente schématiquement une vue de dessus d'une roue de mécanisme d'échappement selon l'invention, et
- la figure 5 représente schématiquement une vue en perspective d'un balancier d'un mécanisme d'oscillation.

### Description détaillée de modes de réalisation préférés

Dans la description, nous présentons des composants rigides pour un mouvement horloger. Le composant est, par exemple, à choisir dans une liste comprenant une ancre de mécanisme d'échappement, une roue de mécanisme d'échappement, un rouage de mouvement horloger, ou un balancier de mécanisme oscillateur.

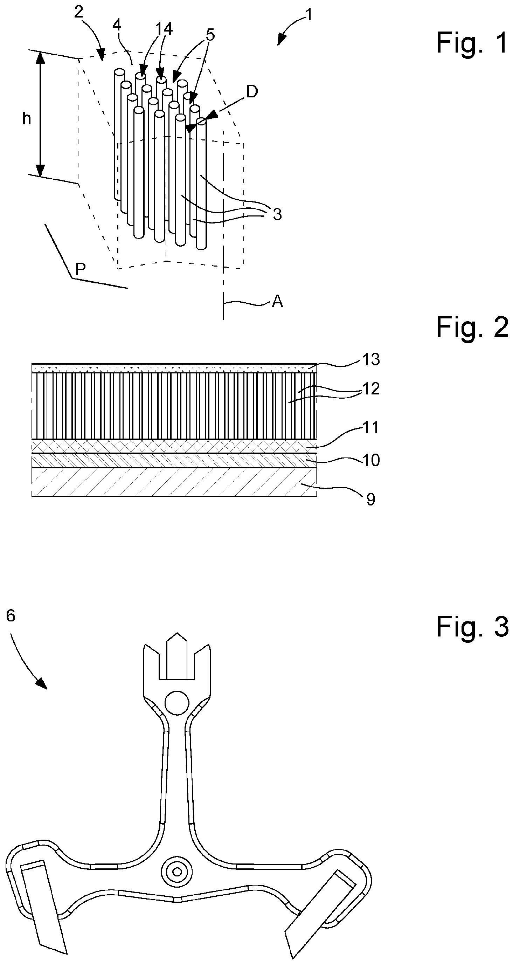

Le composant rigide comporte au moins une partie réalisée en une matière composite 1, représentée sur la figure 1. De préférence, le composant est réalisé entièrement dans cette matière composite 1. Ainsi, les composants de la liste précédentes peuvent être réalisés dans cette matière composite 1.

La matière composite 1 comprend une matrice 2 et une multitude de nanotubes ou de nano-fils 3 répartis dans ladite matrice 2. Le composant a, par exemple, une forme généralement plate s'étendant selon un plan P.

Les nanotubes ou nano-fils 3 forment une structure de la matière composite 1, dans laquelle ils sont juxtaposés et disposés sensiblement parallèlement les uns aux autres. Ils sont sensiblement perpendiculaires au plan P du composant. On entend par nanotube, des tubes dont l'intérieur est généralement creux, tandis que les nano-fils sont des tubes généralement pleins.

Les nanotubes ou nano-fils 3 sont disposés de manière sensiblement parallèle à un axe A, perpendiculaire au plan P du composant. Ils sont régulièrement répartis de manière à être espacés les uns des autres de façon homogène dans la matrice 2. Avantageusement, la matière composite est réalisée de manière à ce que des nanotubes ou nano-fils 3 soient présents dans toute la masse de la matrice 2.

Les nanotubes ou nano-fils 3 ont, par exemple, un diamètre D compris dans un intervalle allant de 2 à 50 nm. De préférence, les nanotubes ou nano-fils 3 ont un diamètre compris dans un intervalle allant de 3 à 15 nm, voire de 5 à 10 nm.

Les nanotubes ou nano-fils 3 peuvent avoir une longueur L comprise dans un intervalle allant de 100 à 500 microns. De préférence, les nanotubes ou nano-fils 3 ont peuvent avoir une longueur comprise dans un intervalle allant de 100 à 300 microns, voire de 150 à 200 microns.

Dans un premier mode de réalisation, la matière composite comporte des nanotubes 3 en carbone. Les nanotubes 3 en carbone sont généralement multi-feuillets, mais peuvent aussi être éventuellement mono-feuillet.

Dans un second mode de réalisation, la matière composite comporte des nano-fils 3 réalisées au moins en partie à partir d'un matériau à choisir dans la liste suivante : de l'or, du silicium, du nitrure de bore, du nitrure de gallium, de l'oxyde de silicium, du nitrure de silicium, de l'oxyde de zinc, de l'arséniure de gallium, du sulfure de tungstène, de l'argent, du cuivre, de l'arséniure de manganèse, de l'arséniure d'indium, du carbone, du diamant.

La matrice 2 comporte un matériau 4 pour remplir les interstices et joindre les nanotubes ou nano-fils 3 les uns aux autres. Le matériau 4 peut avantageusement englober les nanotubes ou nano-fils 3, en étant injecté dans les interstices 5 entre les nanotubes ou nano-fils 3. Ce matériau 4 permet d'apporter de la cohésion entre les nanotubes ou nano-fils 3 et de modifier ainsi les propriétés mécaniques de l'ensemble des nanotubes ou nano-fils 3, en particulier pour rendre la matrice rigide. Dans le premier mode de réalisation des nanotubes, le matériau 4 peut aussi être agencé à l'intérieur 14 des nanotubes 3.

Selon l'invention, le matériau 4 est rigide, le matériau 4 ayant des propriétés mécaniques rigides pour s'opposer à une déformation élastique du composant. Ainsi, grâce à ce matériau rigide 4, on peut réaliser des composants spécifiques de la mécanique horlogère. Le matériau rigide 4 a par exemple un module d'Young supérieur à 2GPa. Le composant 4 peut aussi être rigide grâce à ses dimensions, par exemple en choisissant une épaisseur suffisante empêchant sa déformation.

Pour les deux modes de réalisation, le matériau rigide 4 composant la matrice 2 est réalisé à partir d'un élément de la liste suivante : du tungstène, des matériaux organiques comme le parylène, du nitrure de bore hexagonal, du rubis monocristallin de type Al2O3, du diamant, des bisulfures de tungstène ou de molybdène, du graphite, du plomb, du carbure de silicium, du nickel, du phosphure d'indium, de l'oxyde de titane, du silicium, de l'oxyde de silicium, du carbone. Le matériau rigide 4 peut avantageusement être constitué également de carbone.

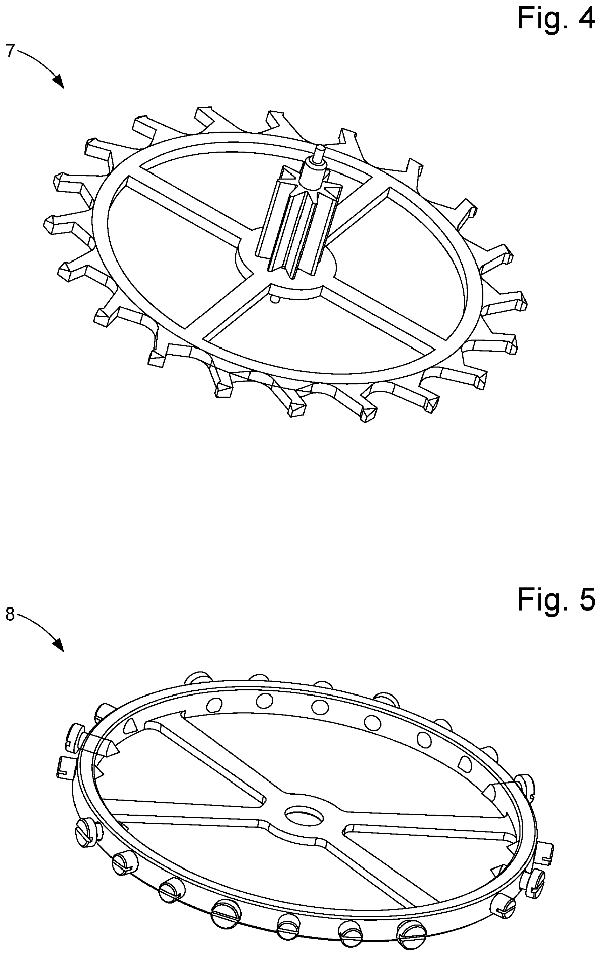

Ainsi, les composants horlogers peuvent bénéficier des avantages des matériaux composites à base de nanotubes ou de nano-fils, tout en conservant une grande rigidité essentielle à ce type de composants. La figure 3 représente une ancre 6 de mécanisme d'échappement faite avec une matière composite selon l'invention. La figure 4 représente une roue d'échappement 7 réalisée à partir d'une telle matière composite. Enfin, le balancier 8 de la figure 5 est également réalisé à partir d'une telle matière composite.

Pour fabriquer les composants du premier mode de réalisation avec les nanotubes de carbone, on utilise, par exemple, un procédé comprenant les étapes suivantes :
- une première étape de préparation d'un substrat, par exemple un substrat en silicium, de préférence par photolithographie, pour que la croissance de la forêt de nanotubes se produise à un endroit précis correspondant à la forme du composant souhaité. Ainsi, on dessine une forme d'ancre, de roue, ou de balancier par photolithographie.
- une deuxième étape de croissance des nanotubes ou nano-fils sur le substrat, non représenté sur les figures, de préférence avec un catalyseur, par exemple du fer,
- une troisième étape d'infitration du matériau rigide constitutif de la matrice dans la distribution de nanotubes ou de nano-fils, et
- une quatrième étape de décrochement du composant du substrat.

On trouve un exemple des premières et deuxièmes étapes dans le document « Mechanical and electrical properties of carbon-nanotube-templated metallic microstructures » (Richard Scott Hansen 06/2012).

Pendant la deuxième étape, on fait croître les nanotubes 16 ou nano-fils parallèlement à un axe sensiblement perpendiculaire au substrat.

Sur la figure 2, le substrat 9 est recouvert d'une couche de silice 10, et d'une couche de catalyseur 11, par exemple du fer. Les nanotubes de carbone 12 sont formés sur la couche de catalyseur 11 par croissance.

En amont de la deuxième étape, des nanotubes supplémentaires peuvent être mélangés dans un solvant et dispersés sur la couche de catalyseur, par exemple par ultrasons, pour définir une couche supérieure de nanotubes. Cette couche supérieure 13 de nanotubes est poreuse pour que la carbone (ou autre matériau) constituant les nanotubes 12 puisse se déposer à travers elle, de sorte que les nanotubes 12 croissent sous la couche supérieure 13. Ainsi, on s'assure d'une croissance régulière et homogène des nanotubes 12 pour qu'ils aient tous sensiblement la même longueur. La troisième étape est également effectuée à travers la couche supérieure 13 de nanotubes 12, grâce à sa porosité. Le décrochement est de préférence effectué par gravure humide ou en phase vapeur, par exemple au moyen de fluorure d'hydrogène HF.

Concernant la fabrication des nano-fils du deuxième mode de de réalisation, on utilise les techniques classiques liées au matériau choisi dans la liste. On utilise de préférence le dépôt de couches minces, par exemple par dépôt chimique de type CVD (pour Chemical Vapor Déposition en anglais) ou par dépôt physique de type PVD (pour physical vapor déposition en anglais). Comme dans le premier mode de réalisation, on utilise des méthodes de photolithographie pour choisir les endroits d'un substrat, par exemple en silicium, où l'on fait croître les nano-fils. On infiltre le matériau rigide entre les nano-fils. Enfin, le composant est décroché du substrat une fois qu'il est terminé.

Naturellement, l'invention n'est pas limitée aux modes de réalisation décrits en référence aux figures et des variantes pourraient être envisagées sans sortir du cadre de l'invention.

## Revendications

1. Composant horloger rigide (6, 7, 8) pour mécanisme oscillateur ou pour mécanisme d'échappement d'un mouvement horloger, le composant comportant au moins une partie réalisée en un matière composite (1), **caractérisée en ce que** la matière composite (1) comprend une matrice (2) et une multitude de nanotubes ou de nano-fils (3) répartis dans la matrice (2), les nanotubes ou nano-fils (3) étant juxtaposés et disposés de manière sensiblement parallèles à un axe (A) sensiblement perpendiculaire au plan (P) du composant, la matrice (2) comportant un matériau rigide (4) pour remplir les interstices et joindre les nanotubes ou nano-fils (3) les uns aux autres, le matériau (4) ayant des propriétés mécaniques rigides pour s'opposer à la déformation élastique du composant (6, 7, 8).

2. Composant (6, 7, 8) selon la revendication 1, **caractérisé en ce que** le matériau rigide (4) a un module d'Young supérieur à 2GPa.

3. Composant (6, 7, 8) selon la revendication 1 ou 2, **caractérisé en ce que** les nanotubes (3) sont en carbone.

4. Composant (6, 7, 8) selon la revendication 3, **caractérisé en ce que** les nanotubes (16) sont multi-feuillets.

5. Composant (6, 7, 8) selon la revendication 1 ou 2, **caractérisé en ce que** les nano-fils (3) sont réalisés à partir d'un élément à choisir dans la liste suivante : de l'or, du silicium, du nitrure de bore, du nitrure de gallium, de l'oxyde de silicium du nitrure de silicium, de l'oxyde de zinc, de l'arséniure de gallium, du sulfure de tungstène, de l'argent, du cuivre, de l'arséniure de manganèse, de l'arséniure d'indium, du carbone, du diamant.

6. Composant (6, 7, 8) selon l'une, quelconque, des revendications précédentes, **caractérisé en ce que** les nanotubes ou nano-fils (3) ont un diamètre (D) compris dans un intervalle allant de 2 à 50 nm, de préférence dans un intervalle allant de 3 à 15 nm, voire de 5 à 10 nm.

7. Composant (6, 7, 8) selon l'une, quelconque, des revendications précédentes, **caractérisé en ce que** les nanotubes ou nano-fils (3) ont une longueur (L) comprise dans un intervalle allant de 100 à 500 microns, de préférence dans un intervalle allant de 100 à 300 microns, voire de 150 à 200 microns.

8. Composant (6, 7, 8) selon l'une, quelconque, des revendications précédentes, **caractérisé en ce que** le matériau rigide (4) est réalisé à partir d'un élément à choisir dans la liste suivante : du tungstène, des matériaux organiques comme le parylène, du nitrure de bore hexagonal, du rubis monocristallin de type Al2O3, du diamant, des bisulfures de tungstène ou de molybdène, du graphite, du plomb, du carbure de silicium, du nickel, du phosphure d'indium, de l'oxyde de titane, du silicium, de l'oxyde de silicium, du carbone.

9. Composant (6) selon l'une, quelconque, des revendications précédentes, **caractérisé en ce qu'**il est une ancre de mécanisme d'échappement.

10. Composant (7) selon l'une, quelconque, des revendications précédentes, **caractérisé en ce qu'**il est une roue de mécanisme d'échappement.

11. Composant selon l'une, quelconque, des revendications précédentes, **caractérisé en ce qu'**il est un rouage de mouvement horloger.

12. Composant (8) selon l'une, quelconque, des revendications précédentes, **caractérisé en ce qu'**il est un balancier de mécanisme oscillateur

13. Mouvement horloger, **caractérisé en ce qu'**il comprend un composant horloger rigide (6, 7, 8) selon l'une, quelconque, des revendications précédentes.
